# EUROPEAN PATENT SPECIFICATION

(11) **EP 2 860 383 B1**
(45) Date of publication and mention of the grant of the patent: **22.08.2018**
(21) Application number: 14186241.7
(22) Date of filing: 24.09.2014
(51) Int. Cl.: F02M 21/04, F02M 19/03, F02M 9/08, F23D 11/00

(54) **Carburetor for feeding internal combustion engines**
Vergaser zur Versorgung von Verbrennungsmotoren
Carburateur destiné à alimenter des moteurs à combustion interne

(30) Priority: 09.10.2013 IT BO20130554
(43) Date of publication of application: 15.04.2015
(73) Proprietor: Telair S.R.L., 48022 Lugo, RA (IT)
(72) Inventor: Fabbri, Raul, 48015 Cervia RA (IT)
(74) Representative: Modiano, Micaela Nadia

(56) References cited:
- GB-A- 327 953
- GB-A- 481 139
- GB-A- 191 025 685
- JP-A- 2009 180 463
- US-A- 5 806 490

## Description

The present invention relates to a carburetor for feeding internal combustion engines.

Currently, vehicles such as campers, caravans, truck campers and the like are usually provided with electric power generating sets, i.e., devices capable for example of recharging electric batteries in order to ensure the correct operation of the many user devices (lighting, heating, TV, refrigerator, et cetera) with which such vehicles are equipped.

As is known, such sets use an internal combustion engine and an electric power generator (for example an alternator), arranged downstream of the engine, to convert the mechanical energy supplied by the engine into the desired electric power.

For the specific application mentioned above, therefore, typically internal combustion engines are used which are provided with a carburetor capable of mixing air and fuel in the desired stoichiometric ratio, i.e., chosen so as to give the engine a specific rotation rate, at which the engine, and the electric power generating set with it, has optimum efficiency.

For this purpose, carburetors are therefore known which comprise a box-like shell connected to the combustion chamber of the engine.

Inside the shell, and by way of the partial vacuum generated downstream, air is drawn into the combustion chamber through respective openings that lead to a channel, along which the air is thus forced to travel.

Before reaching the chamber, the air is struck by the fuel, introduced in the shell through a respective nozzle, which nebulizes it and thus allows to mix it with the air.

The combustion chamber, and the engine proper, are thus fed with a mix of air and fuel, in proportions defined by the number and size of the openings that allow, as mentioned, the inflow of the air into the shell.

However, this constructive solution is not devoid of drawbacks.

It is in fact evident, from what has been described above, that the amount of aspirated air, and therefore the stoichiometric ratio with which the air-fuel mix is sent to the combustion chamber, depends directly on parameters (number and size of the openings) that are substantially geometric and therefore fixed.

For the type of carburetor and application described here, therefore, intended to operate at constant power and without the possibility to resort to movable elements (throttle valves, for example) operated continuously by the user, the stoichiometric ratio is in practice impossible to change, even to a minimal extent.

This limitation is often unpleasant or even unacceptable, especially when, during preliminary trimming and tuning of the power generating set, it would be necessary to introduce even small changes in the design stoichiometric ratio in order to adapt it to the application requirements (possibly dictated by particular operating conditions) of the specific vehicle for which the set is intended.

GB25685 and GB481139 disclose carburetors having a combination of features as set forth in the pre-characterizing portion of the appended claim 1.

The aim of the present invention is to solve the problems described above, by providing a carburetor that is capable of ensuring optimum operation of the internal combustion engine with which it is associated.

Within this aim, an object of the invention is to provide a carburetor that allows to perform optimum trimming and tuning, during installation of the engine with which it is associated, without resorting to elements that move continuously during operation.

A further object of the invention is to provide a carburetor that is structurally simple and easy to provide in practice.

A further object of the invention is to provide a carburetor that ensures high reliability in operation.

Another object of the invention is to provide a carburetor that can be obtained easily starting from commonly commercially available elements and materials.

Another object of the invention is to provide a carburetor that has low costs and is safe in application.

In accordance with the invention, there is provided a carburetor for feeding internal combustion engines as defined in the appended claims.

Further characteristics and advantages of the invention will become better apparent from the description of a preferred but not exclusive embodiment of the carburetor according to the invention, illustrated by way of nonlimiting example in the accompanying drawings, wherein:
Figure 1 is an exploded perspective view of the carburetor according to the invention;
Figure 2 is a partially sectional top view of the carburetor according to the invention, in an adjustment configuration;
Figure 3 is a partially sectional side elevation view of the carburetor according to the invention, in the configuration of Figure 2;
Figure 4 is a sectional view of Figure 2, taken along a plane that is parallel to the trimming element and is perpendicular to the shell.

With reference to the figures, the reference numeral 1 generally designates a carburetor for feeding internal combustion engines, which comprises an outer shell 2, which defines internally at least one air and fuel mixing duct 3.

The duct 3 is interposed between at least one opening 4a, 4b, for the inflow of air, and an outlet 5, which can be connected to a combustion chamber of an internal combustion engine.

Moreover, the duct 3 is affected by at least one nozzle 6, intended to introduce (and simultaneously nebulize) the fuel to be mixed with the air, prior to sending to the combustion chamber of the internal combustion engine.

It should be noted from the outset that in the preferred application, to which reference shall be made constantly in the continuation of the present description, the internal combustion engine (and the carburetor 1 according to the invention with it) is intended to be part of an electric power generating set, i.e., of an apparatus that comprises, in addition to the internal combustion engine, an electric power generator (for example an alternator), arranged downstream of the engine, for converting the mechanical energy supplied by the latter into electric power.

The electric power generating set can thus be applied preferably but not exclusively in vehicles such as campers, caravans, truck campers and the like, for example to recharge the electric batteries with which such vehicles are equipped, in order to ensure the correct operation of the many user devices (lighting, heating, TV, refrigerator, et cetera) with which they are provided.

In turn, the internal combustion engine (also, for example, of a substantially known type) can be fed with any type of fuel, be it gasoline, diesel fuel, methane, LPG or other liquid or gaseous fuel, optionally already used for the propulsion of the vehicle on which the electric power generating set will be installed and intended to be mixed with air prior to its introduction in the combustion chamber.

In substantially known manners, therefore, due to the partial vacuum generated in the combustion chamber of the engine, which in turn is connected directly to the duct 3 of the carburetor 1 through the outlet 5, the air is aspirated by the openings 4a, 4b and conveyed toward the chamber, not before being mixed with the desired fuel, introduced in the duct 3 by way of the nozzle 6.

Although, as already noted, the feeding of internal combustion engines of electric power generating sets is a preferred application of the carburetor 1, it is useful to specify that the use of the carburetor 1 in different fields of application, as a function of the specific requirements, without thereby abandoning the protective scope claimed herein, is not ruled out.

For example, the carburetor 1 can be used favorably in association with any internal combustion engine that operates at constant power.

According to the invention, the carburetor 1 comprises at least one trimming element 7, which is constituted substantially by a stem 8 that can move selectively between at least one first configuration, for free passage of the air through the at least one opening 4a, 4b, and at least one adjustment configuration, in which the stem 8 is arranged so as to obstruct at least partially the at least one opening 4a, 4b.

It is immediate to note that at this adjustment configuration there is, as a consequence, a reduction of the overall passage section available for air inflow. It is therefore possible to vary the quantity of air which, in the unit time, enters the duct 3 and mixes with the fuel, and therefore the stoichiometric ratio between the two components. This allows to perform excellent trimming and tuning, during the installation of the engine and of the electric power generating set to which the carburetor 1 is connected: the use of the latter therefore ensures optimum operation of the internal combustion engine, with which it is associated, in practice achieving from the outset the intended aim.

In particular, the shell 2 has a plurality of openings 4a, 4b and the stem 8 therefore can move selectively between the first configuration and a plurality of adjustment configurations, in each of which the stem 8 is arranged correspondingly so as to obstruct partially one or more of the openings 4a, 4b, with consequent reduction of the overall passage section available for air inflow.

The stem 8 can thus be moved by the user into one, selectively, of the possible adjustment configurations, each of which identifies a different value of the passage section available for air inflow (of course as a function of the number of openings 4a, 4b that in each instance are not affected by the stem 8), and this allows to perform extremely accurate calibrations, leaving the user with the possibility to vary at will the stoichiometric ratio of the mix that is sent to the combustion chamber.

More particularly, according to a constructive solution of considerable practical interest, shown in the accompanying figures by way of non-limiting example of the application of the invention, some openings 4a face internally a guiding interspace 9, in which the stem 8 can be accommodated slidingly.

It should also be noted that in the solution shown in the accompanying figures other openings 4b are instead oriented directly toward the duct 3, without the interposition of other elements.

The openings 4a, which face internally the interspace 9, are located opposite respective holes 10 that are provided along the interspace 9 and are directed toward the duct 3.

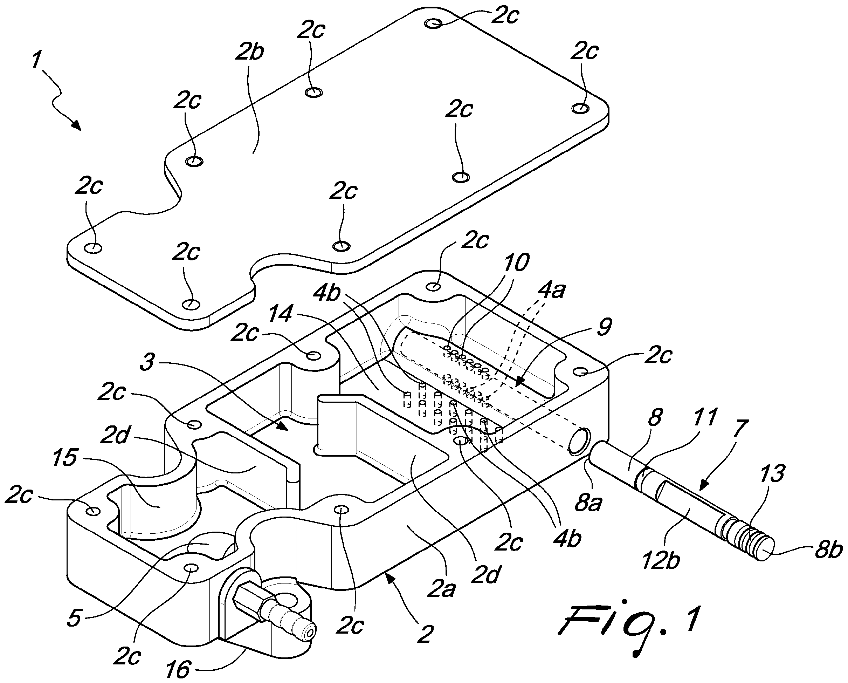

In this manner, at the first configuration (and/or when the stem 8 is completely extracted from the interspace 9, as in Figure 1 for example), the duct 3 and the interspace 9 are connected to the outside both through the openings 4b and through each opening 4a and each hole 10. In particular, the air can flow in the duct 3 both directly, through the openings 4b, and after entering the interspace 9 through the openings 4a and exiting from it through the holes 10, which are indeed directed toward the duct 3.

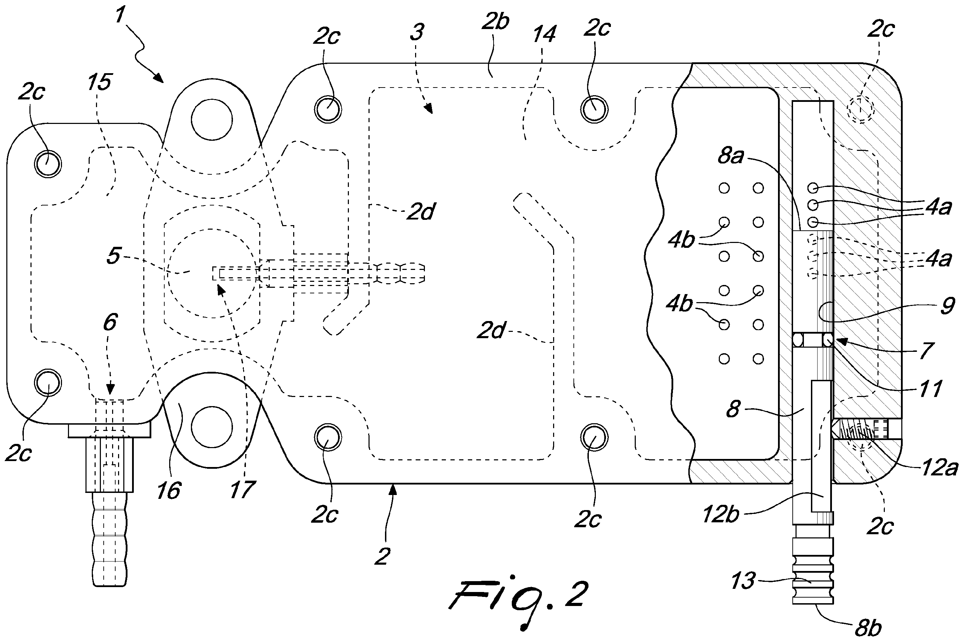

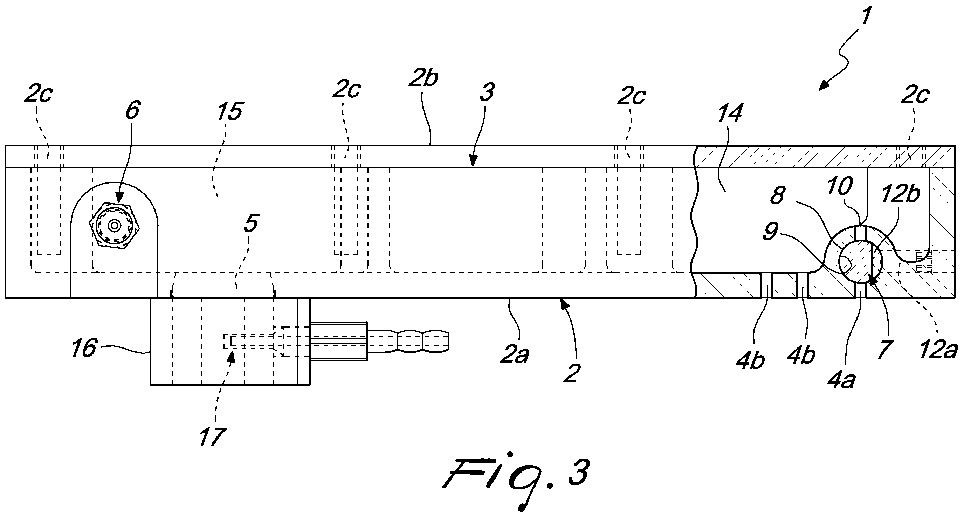

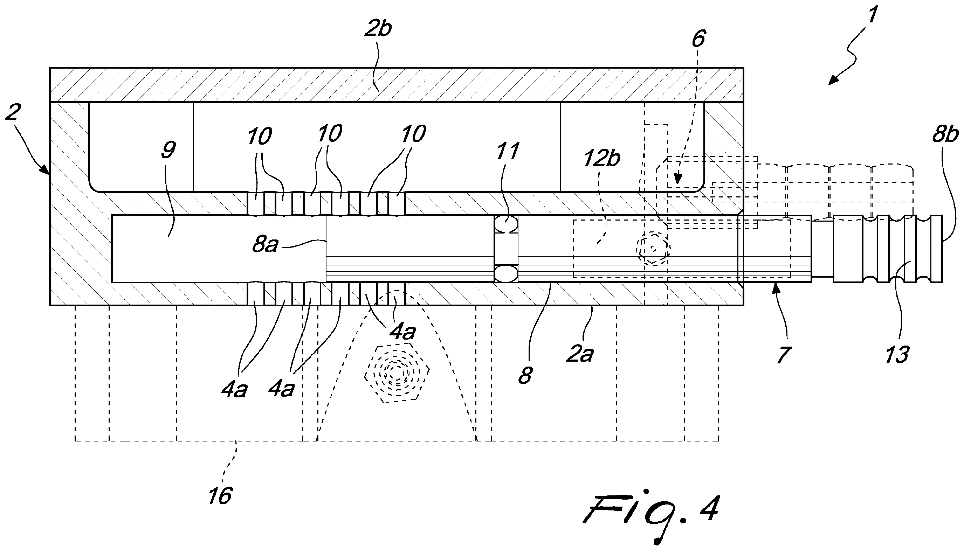

Vice versa, upon the progressive sliding insertion of the stem 8 in the interspace 9, the holes 10 and the openings 4a are obstructed gradually, so as to reduce the overall passage section available for the inflow of air into the duct 3, and thus define several adjustment configurations, such as for example those of Figures 2 to 4.

Conveniently, the carburetor 1 comprises means for blocking the stem 8, so as to hinder and prevent its accidental sliding (for example due to vibrations) in the interspace 9 after the user has placed it in the desired configuration, following the trimming operation.

In particular, the blocking means can comprise at least one O-ring 11 wrapped around the stem 8: in this manner, the O-ring 11 can contrast by friction the accidental sliding of the stem 8 in the interspace 9.

As an alternative to the O-ring 11, or in addition to it (as in the accompanying figures), the locking means can comprise at least one grub 12a, which can be inserted in a recess 12b provided along the stem 8: thus, upon reaching the desired configuration, the grub 12a can contrast by interference the accidental sliding of the stem 8 in the interspace 9.

The stem 8 has a first end 8a and a second end 8b that is opposite the first end 8a: at the first end 8a, the stem 8 is inserted in the interspace 9, while conveniently the second end 8b has a knurling 13 to allow easier grip by the user.

In the preferred constructive solution, proposed in the accompanying figures by way of nonlimiting example of the application of the invention, the openings 4a, 4b and the holes 10 lead to a first portion of the duct 3, which is constituted substantially by a labyrinth 14 that is contoured appropriately. In the labyrinth 14, due to the redirections and turns to which it is forced, the air stream that flows through the duct 3 is subjected to sudden decelerations and accelerations, which impose a turbulent condition to the motion of the air, which arrives from the openings 4a, 4b and is directed toward the combustion chamber through the outlet 5.

Furthermore, the already cited nozzle 6 faces a second portion of the duct 3, which is arranged downstream of the labyrinth 14 and is constituted substantially by a compartment 15 for mixing the air with the fuel before sending to the combustion chamber of the internal combustion engine.

It should be noted that the mixing of the air with the fuel is facilitated by the choice, described earlier, of imposing beforehand a turbulent motion condition to the air, thereby allowing optimum carburation.

Positively, the shell 2 is substantially box-like and is constituted substantially by a tray 2a that is closed in an upward region by a respective cover 2b (for example by means of screws or the like that can be inserted in seats 2c that can be mutually aligned and are provided along the cover 2b and the tray 2a). The labyrinth 14 and the compartment 15 (and more generally the duct 3) are thus comprised between the tray 2a and the cover 2b and are conveniently shaped by internal partitions 2d (in a number chosen at will, as a function of the requirements), which protrude internally from the side walls of the tray 2a.

Advantageously, the carburetor 1 according to the invention comprises a connection sleeve 16, which faces the outlet 5 and can be associated with the combustion chamber of the internal combustion engine: along the sleeve 16 there is a dispenser 17 of lubricant (for example oil).

Operation of the carburetor according to the invention is as follows.

As noted, due to the partial vacuum created in the combustion chamber of the engine, the air is aspirated into the duct 3 through the openings 4a, 4b.

The air then passes through the labyrinth 14, which imposes a turbulent motion condition to the air in order to facilitate its mixing with the fuel, which is introduced in the duct 3 at the compartment 15 arranged downstream of the labyrinth 14 and connected, through the outlet 5, to the sleeve 16 and therefore to the combustion chamber of the internal combustion engine.

In the sleeve 16, the dispenser 17 disperses in the air and fuel mix obtained in the compartment 15 also the lubricant needed for the optimum operation of the engine.

As shown, the air can be conveyed into the labyrinth 14 through the openings 4b, which face the latter directly. Moreover, in the first configuration, the air can be introduced in the labyrinth 14 after passing in series through one of the openings 4a, the interspace 9 and one of the holes 10.

Therefore, in the first configuration, all the openings 4a, 4b can be arranged for the inflow of air, which is aspirated into the duct 3, allowing to use the maximum available passage section (which is equivalent to the sum of the passage sections defined by each opening 4a, 4b).

In order to vary and reduce the overall available passage section, the user can use the trimming element 7, constituted by the stem 8.

In fact, by inserting it progressively in the guiding interspace 9, the stem 8 moves gradually to obstruct one or more of the openings 4a (and of the holes 10 that are opposite thereto), thereby defining respective adjustment configurations (such as indeed the one of Figures 2 to 4). Each one of these adjustment configurations is matched, therefore, by a respective overall passage section available to the air that is reduced with respect to the one that corresponds to the first configuration (of course as a function of the position of the stem 8 in the interspace 9 and therefore of the number of openings 4a that are obstructed).

Therefore, by way of the stem 8 and the selective variation of the quantity of air that enters in the unit time (due to the variation of the intake section), the user (the installation technician) can make changes, even small ones, to the stoichiometric ratio of the air-fuel mix defined by design, in order to adapt it to the application requirements (optionally dictated by particular operating conditions) of the specific vehicle for which the carburetor 1, and the electric power generating set on which it is installed, is intended.

It is thus possible to obtain, in a practical and easy manner, an optimum trimming and tuning of the carburetor 1 during the installation of the engine to which the carburetor 1 is connected, thereby ensuring optimum operation without resorting to elements that can move continuously during operation and therefore with a structurally simple solution.

Furthermore, by way of the locking means it is possible to avoid the danger that vibrations or other factors might cause an accidental and unwanted movement of the stem 8 after it has been moved into the desired configuration.

Finally, it should be noted that the choice to resort to partitions 2d that protrude exclusively from the side walls of the tray 2a allows to simplify significantly the process for the production of the shell 2: the cover 2b in fact can be obtained from a simple shape of metal plate that is laser-cut (or by blanking or punching), while a single mold is sufficient to provide the tray 2a with the partitions 2d (in a number chosen at will as a function of the specific requirements) and therefore the labyrinth 14 and the compartment 15 formed by them.

In practice it has been found that the carburetor according to the invention achieves fully the intended aim, since the use of a trimming element constituted by a stem that can move between at least one first configuration, for free air passage, and at least one adjustment configuration, in which the stem is arranged so as to obstruct at least partially the at least one opening through which air can enter the duct that leads to the combustion chamber, with consequent reduction of the overall passage section, allows to provide a carburetor that is capable of ensuring optimum operation of the internal combustion engine with which it is associated.

The invention thus conceived is susceptible of numerous modifications and variations, all of which are within the scope of the appended claims; all the details may further be replaced with other technically equivalent elements.

In the examples of embodiment shown, individual characteristics, given in relation to specific examples, may actually be interchanged with other different characteristics that exist in other examples of embodiment.

In practice, the materials used, as well as the dimensions, may be any according to requirements and to the state of the art. Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A carburetor for feeding internal combustion engines, comprising an outer shell (2), which defines internally at least one air and fuel mixing duct (3), said duct (3) being interposed between at least one opening (4a, 4b) for the inflow of air, and an outlet (5), which can be connected to a combustion chamber of an internal combustion engine, said duct (3) being affected by at least one nozzle (6), for introducing the fuel to be mixed with the air, prior to sending to the combustion chamber of the internal combustion engine, the carburetor further comprising at least one trimming element (7), which is constituted substantially by a stem (8) that can move selectively between at least one first configuration, for free passage of the air through said at least one opening (4a, 4b), and at least one adjustment configuration, in which said stem (8) is arranged so as to at least partially obstruct said at least one opening (4a, 4b), with consequent reduction of the overall passage section available for the inflow of the air, **characterized in that** said shell (2) is provided with a plurality of said openings (4a, 4b), said stem (8) being movable selectively between said at least one first configuration and a plurality of said adjustment configurations, in each one of said adjustment configurations said stem (8) being arranged correspondingly so as to partially obstruct at least one of said openings (4a, 4b), with consequent reduction of the overall passage section available for the inflow of the air.

2. The carburetor according to claim 1, **characterized in that** at least some of said openings (4a) face internally a guiding interspace (9), for the sliding accommodation of said stem (8), and are arranged opposite respective holes (10) that are provided along said interspace (9) and are directed toward said duct (3), at at least said first configuration said duct (3) being connected to the outside through each one of said openings (4a, 4b) and each one of said holes (10), upon the progressive sliding insertion of said stem (8) in said interspace (9) said holes (10) and said openings (4a) being obstructed progressively in order to define said adjustment configurations.

3. The carburetor according to one or more of the preceding claims, **characterized in that** it comprises means for locking said stem (8), for hindering the accidental sliding of said stem (8) in said interspace (9).

4. The carburetor according to claim 3, **characterized in that** said locking means comprise at least one O-ring (11), which is wrapped around said stem (8), said O-ring (11) contrasting by friction the accidental sliding of said stem (8) in said interspace (9).

5. The carburetor according to claim 3, **characterized in that** said locking means comprise at least one grub (12a), which can be inserted in a recess (12b) provided along said stem (8), upon reaching the desired configuration, said grub (12a) contrasting by interference the accidental sliding of said stem (8) in said interspace (9).

6. The carburetor according to one or more of the preceding claims, **characterized in that** said stem (8) has a first end (8a) and a second end (8b) arranged opposite said first end (8a), said stem (8) being insertable in said interspace (9) at said first end (8a), said second end (8b) having a knurling (13) for easier grip by a user.

7. The carburetor according to one or more of the preceding claims, **characterized in that** said openings (4a, 4b) and said holes (10) lead to a first portion of said duct (3), which is constituted substantially by an appropriately contoured labyrinth (14) for imposing a turbulent condition to the motion of the air that arrives from said openings (4a, 4b) and is directed toward the combustion chamber, said nozzle (6) facing a second portion of said duct (3), which is arranged downstream of said labyrinth (14) and is constituted substantially by a compartment (15) for mixing the air with the fuel, prior to sending to the combustion chamber of the internal combustion engine.

8. The carburetor according to one or more of the preceding claims, **characterized in that** said shell (2) has a substantially boxlike shape and is constituted substantially by a tray (2a) that is closed in an upward region by a respective cover (2b), said labyrinth (14) and said compartment (15) being comprised between said tray (2a) and said cover (2b) and being appropriately shaped by internal partitions (2d), which protrude internally from the side walls of said tray (2a).

9. The carburetor according to one or more of the preceding claims, **characterized in that** it comprises a connection sleeve (16), which faces said outlet (5) and can be associated with the combustion chamber of the internal combustion engine, a lubricant dispenser (17) being arranged along said sleeve (16).

## Patentansprüche

1. Ein Vergaser zur Versorgung von Verbrennungsmotoren, der ein Außengehäuse (2) umfasst, das intern mindestens einen Mischkanal (3) für Luft und Treibstoff bestimmt, wobei der Kanal (3) angeordnet ist zwischen mindestens einer Öffnung (4a, 4b) für das Einströmen von Luft und einem Auslass (5), der an einen Brennraum eines Verbrennungsmotors angeschlossen werden kann, wobei der Kanal (3) von mindestens einer Düse (6) beeinflusst wird, zum Einlassen des mit der Luft zu mischenden Treibstoffs vor dem Weiterleiten an den Brennraum des Verbrennungsmotors, wobei der Vergaser weiter mindestens ein Trimmelement (7) umfasst, das im Wesentlichen aus einem Schaft (8) besteht, der sich wahlweise zwischen mindestens einer ersten Anordnung für den freien Durchlass der Luft durch die mindestens eine Öffnung (4a, 4b) und mindestens einer Anpassungsanordnung bewegen kann, in welcher der Schaft (8) angeordnet ist, um die mindestens eine Öffnung (4a, 4b) zumindest teilweise zu blockieren, mit daraus folgender Verkleinerung des gesamten Durchlass-Querschnitts, der für das Einströmen der Luft zur Verfügung steht, **dadurch gekennzeichnet, dass** das Gehäuse (2) mit einer Vielzahl der Öffnungen (4a, 4b) ausgestattet ist, wobei der Schaft (8) wahlweise beweglich ist zwischen der mindestens einen ersten Anordnung und einer Vielzahl der Anpassungsanordnungen, wobei in jeder der Anpassungsanordnungen der Schaft (8) entsprechend angeordnet ist, um mindestens eine der Öffnungen (4a, 4b) teilweise zu blockieren, mit daraus folgender Verkleinerung des gesamten Durchlass-Querschnitts, der für das Einströmen der Luft zur Verfügung steht.

2. Der Vergaser gemäß Anspruch 1, **dadurch gekennzeichnet, dass** mindestens einige der Öffnungen (4a) innen einem Führungszwischenraum (9) für die gleitende Aufnahme des Schafts (8) zugewandt und gegenüber entsprechenden Bohrungen (10) angeordnet sind, die entlang dem Zwischenraum (9) angebracht und zu dem Kanal (3) hin gerichtet sind, wobei zumindest in der ersten Anordnung der Kanal (3) durch jede der Öffnungen (4a, 4b) und jede der Bohrungen (10) mit der Außenseite verbunden ist, wobei bei fortschreitendem gleitendem Einführen des Schafts (8) in den Zwischenraum (9) die Bohrungen (10) und die Öffnungen (4a) fortschreitend blockiert werden, um die Anpassungsanordnung zu bestimmen.

3. Der Vergaser gemäß einem oder mehreren der obigen Ansprüche, **dadurch gekennzeichnet, dass** er Mittel umfasst, um den Schaft (8) zu blockieren, um das zufällige Gleiten des Schafts (8) in dem Zwischenraum (9) zu verhindern.

4. Der Vergaser gemäß Anspruch 3, **dadurch gekennzeichnet, dass** die Blockiermittel mindestens einen O-Ring (11) umfassen, der den Schaft (8) umgibt, wobei der O-Ring (11) durch Reibung dem zufälligen Gleiten des Schafts (8) in dem Zwischenraum (9) entgegenwirkt.

5. Der Vergaser gemäß Anspruch 3, **dadurch gekennzeichnet, dass** die Blockiermittel mindestens einen Gewindestift (12a) umfassen, der in eine Vertiefung (12b) eingesetzt werden kann, die entlang dem Schaft (8) angebracht ist, wobei beim Erreichen der gewünschten Anordnung der Gewindestift (12a) durch Interferenz dem zufälligen Gleiten des Schafts (8) in dem Zwischenraum (9) entgegenwirkt.

6. Der Vergaser gemäß einem oder mehreren der obigen Ansprüche, **dadurch gekennzeichnet, dass** der Schaft (8) ein erstes Ende (8a) und ein zweites Ende (8b) hat, das gegenüber dem ersten Ende (8a) angeordnet ist, wobei der Schaft (8) an dem ersten Ende (8a) in den Zwischenraum (9) einführbar ist, wobei das zweite Ende (8b) eine Rändelung (13) zum besseren Ergreifen durch einen Benutzer hat.

7. Der Vergaser gemäß einem oder mehreren der obigen Ansprüche, **dadurch gekennzeichnet, dass** die Öffnungen (4a, 4b) und die Bohrungen (10) zu einem ersten Abschnitt des Kanals (3) führen, der im Wesentlichen aus einem angemessen konturierten Labyrinth (14) besteht, um die Bewegung der Luft in einen turbulenten Zustand zu bringen, die von den Öffnungen (4a, 4b) kommt und zum Brennraum hin gerichtet ist, wobei die Düse (6) einem zweiten Abschnitt des Kanals (3) zugewandt ist, der stromabwärts von dem Labyrinth (14) angeordnet ist und im Wesentlichen aus einem Raum (15) zum Mischen der Luft mit dem Treibstoff vor der Weiterleitung an den Brennraum des Verbrennungsmotors besteht.

8. Der Vergaser gemäß einem oder mehreren der obigen Ansprüche, **dadurch gekennzeichnet, dass** das Gehäuse (2) eine im Wesentlichen kastenartige Form hat und im Wesentlichen aus einer Schale (2a) besteht, die in einem oberen Bereich durch einen entsprechenden Deckel (2b) verschlossen ist, wobei das Labyrinth (14) und der Raum (15) zwischen der Schale (2a) und dem Deckel (2b) eingeschlossen sind und entsprechend durch interne Trennwände (2d) gebildet werden, die innen aus den Seitenwänden der Schale (2a) herausragen.

9. Der Vergaser gemäß einem oder mehreren der obigen Ansprüche, **dadurch gekennzeichnet, dass** er eine Verbindungshülse (16) umfasst, die dem Auslass (5) zugewandt ist und mit dem Brennraum des Verbrennungsmotors verbunden werden kann, wobei ein Schmiermittelspender (17) entlang der Hülse (16) angeordnet ist.

## Revendications

1. Carburateur pour alimenter des moteurs à combustion interne, comprenant une coque extérieure (2), qui définit intérieurement au moins un conduit (3) de mélange d'air et de carburant, ledit conduit (3) étant intercalé entre au moins une ouverture (4a, 4b) pour l'entrée d'air, et un orifice de sortie (5), qui peut être relié à une chambre de combustion d'un moteur à combustion interne, ledit conduit (3) étant pourvu au moins d'une buse (6), pour introduire le carburant destiné à être mélangé avec l'air, avant l'envoi vers la chambre de combustion du moteur à combustion interne, le carburateur comprenant en outre au moins un élément de réglage, qui est constitué sensiblement par une tige (8) qui peut se déplacer sélectivement entre au moins une première configuration, pour un passage libre de l'air à travers ladite au moins une ouverture (4a, 4b), et au moins une configuration de réglage, dans laquelle ladite tige (8) est agencée de façon à obstruer au moins en partie ladite au moins une ouverture (4a, 4b), avec une réduction conséquente de la section de passage globale disponible pour l'entrée de l'air, **caractérisé en ce que** ladite coque (2) est pourvue d'une pluralité desdites ouvertures (4a, 4b), ladite tige (8) étant mobile sélectivement entre ladite au moins une première configuration et une pluralité desdites configurations de réglage, dans chacune desdites configurations de réglage ladite tige (8) étant agencée de manière correspondante de façon à obstruer partiellement au moins une desdites ouvertures (4a, 4b), avec une réduction conséquente de la section de passage globale disponible pour l'entrée de l'air.

2. Carburateur selon la revendication 1, **caractérisé en ce qu'**au moins certaines desdites ouvertures (4a) font face intérieurement à un espace de guidage (9), pour accueillir de manière coulissante ladite tige (8), et sont agencées à l'opposé de trous (10) respectifs qui sont placés le long dudit espace (9) et sont dirigés vers ledit conduit (3), au niveau d'au moins ladite première configuration ledit conduit (3) étant connecté à l'extérieur par l'intermédiaire de chacune desdites ouvertures (4a, 4b) et chacun desdits trous (10), lors de l'insertion coulissante progressive de ladite tige (8) dans ledit espace (9) lesdits trous (10) et lesdites ouvertures (4a) étant obstruées progressivement afin de définir lesdites configurations de réglage.

3. Carburateur selon une ou plusieurs des revendications précédentes, **caractérisé en ce qu'**il comprend des moyens pour bloquer ladite tige (8), pour empêcher le coulissement accidentel de ladite tige (8) dans ledit espace (9).

4. Carburateur selon la revendication 3, **caractérisé en ce que** lesdits moyens de blocage comprennent au moins un joint torique (11), qui est enroulé autour de ladite tige (8), ledit joint torique (11) contrant par frottement le coulissement accidentel de ladite tige (8) dans ledit espace (9).

5. Carburateur selon la revendication 3, **caractérisé en ce que** lesdits moyens de blocage comprennent au moins une vis sans tête (12a), qui peut être insérée dans un évidement (12b) placé le long de ladite tige (8), lorsqu'on atteint la configuration souhaitée, ladite vis sans tête (12a) contrant par interférence le coulissement accidentel de la tige (8) dans ledit espace (9).

6. Carburateur selon une ou plusieurs des revendications précédentes, **caractérisé en ce que** ladite tige (8) a une première extrémité (8a) et une seconde extrémité (8b) agencée à l'opposé de la première extrémité (8a), ladite tige (8) pouvant être insérée dans ledit espace (9) au niveau de ladite première extrémité (8a), ladite seconde extrémité (8b) ayant un moletage (13) pour une meilleure préhension par un utilisateur.

7. Carburateur selon une ou plusieurs des revendications précédentes, **caractérisé en ce que** lesdites ouvertures (4a, 4b) et lesdits trous (10) mènent à une première partie dudit conduit (3), qui est constitué sensiblement par un labyrinthe (14) formé de manière appropriée pour imposer un état turbulent au mouvement de l'air qui arrive depuis lesdites ouvertures (4a, 4b) et est dirigé vers la chambre de combustion, ladite buse (6) faisant face à une seconde partie dudit conduit (3), qui est agencée en aval dudit labyrinthe (14) et est constitué sensiblement par un compartiment (15) pour mélanger l'air avec le carburant, avant envoi à la chambre de combustion du moteur à combustion interne.

8. Carburateur selon une ou plusieurs des revendications précédentes, **caractérisé en ce que** ladite coque (2) a une forme sensiblement de boîte et est constituée sensiblement par un plateau (2a) qui est fermé dans une région amont par un couvercle (2b) respectif, ledit labyrinthe (14) et ledit compartiment (15) étant compris entre ledit plateau (2a) et ledit couvercle (2b) et étant formés de manière appropriée par des séparations intérieures (2d), qui font saillies intérieurement depuis les parois latérales dudit plateau (2a).

9. Carburateur selon une ou plusieurs des revendications précédentes, **caractérisé en ce qu'**il comprend un manchon de connexion (16), qui fait face audit orifice de sortie (5) et peut être associé à la chambre de combustion du moteur à combustion interne, un distributeur de lubrifiant (17) étant agencé le long dudit manchon (16).
